**Europäisches Patentamt**

**European Patent Office**

**Office européen des brevets**

(19)

(11) Veröffentlichungsnummer: **0 114 360**
A2

(12) # EUROPÄISCHE PATENTANMELDUNG

(21) Anmeldenummer: **83112902.8**

(22) Anmeldetag: **21.12.83**

(51) Int. Cl.³: **D 06 P 3/66**
D 06 P 3/10, D 06 P 1/00
C 09 B 67/22

(30) Priorität: **23.12.82 DE 3247727**

(43) Veröffentlichungstag der Anmeldung:
**01.08.84 Patentblatt 84/31**

(84) Benannte Vertragsstaaten:
**CH DE FR GB IT LI**

(71) Anmelder: **HOECHST AKTIENGESELLSCHAFT**
**Postfach 80 03 20**
**D-6230 Frankfurt am Main 80(DE)**

(72) Erfinder: **Ong, Sienling, Dr.**
**Jahnstrasse 38**
**D-6238 Hofheim am Taunus(DE)**

(54) Nuancierverfahren unter Verwendung reaktiver und nicht reaktiver Farbstoffe.

(57) Farbtonlücken in einem Reaktivfarbstoffsortiment werden als nachteilig in der Praxis empfunden. Die Gründe hierfür können sowohl in Problemen bei der Synthetisierung und Reproduzierbarkeit als auch in mangelnden Trageeigenschaften liegen.

Erfindungsgemäß wurde nun gefunden, daß sich solche fehlende Nuancen durch Mischungen aus Reaktivfarbstoffen mit mindestens zwei Reaktivgruppen und wasserlöslichen, nichtreaktiven Farbstoffen, die mindestens ein umsetzungsfähiges Wasserstoffatom aufweisen, einstellen lassen. Bei der Applikation von derartigen Farbstoffkombinationen auf hydroxy- bzw. carbonamidgruppen-haltigen Fasern erfüllt der Reaktivfarbstoff die Funktion eines Bindegliedes zwischen der Faser und dem nicht-reaktiven Nuancierungsfarbstoff, wodurch eine homöopolare Bindung zustandekommt und daraus sehr echte Färbungen und Drucke bei gleichzeitigem Aufbau der gewünschten Nuance resultieren.

EP 0 114 360 A2

Croydon Printing Company Ltd.

- ] -

## Nuancierverfahren unter Verwendung reaktiver und nicht reaktiver Farbstoffe

Es ist bekannt, daß in der Palette von für die Praxis zur Verfügung stehenden Reaktivfarbstoffen Farbstofflücken existieren, die sich im Einklang mit den an ein Handelssortiment gestellten Belangen nur schwer schließen lassen. Ein derartiges coloristisches Defizit in Bezug auf eine vollständige Farbstoffgamme kann auf technische, chemische oder coloristische Ursachen zurückzuführen sein. Man ist deshalb in besonderen Fällen gezwungen, bei der Einstellung eines Farbrezeptes für den Aufbau einer nicht unmittelbar zugänglichen Nuance auf den Einsatz von Farbstoffmischungen zurückzugreifen.

Unter Nuancen-Aufbau wird in der Praxis das Färben von Farbstoff-Kombinationen verstanden, wobei als Forderung gilt, daß die Einzelkomponenten in bestimmter Zeiteinheit und bei bestimmter Temperaturerhöhung möglichst gleichmäßig auf das Fasermaterial (Farbträger) aufziehen müssen.

Sogenannte Nuancierungen zum Ausgleich einer Abweichung vom gewünschten Farbton werden im Textildruck üblicherweise durch Zufügen von Farbstoffen des gleichen Sortiments oder wenigstens der gleichen Klasse durchgeführt, die - vom färberischen Gesichtspunkt ausgesucht - von den Farbstoffherstellern zur Anwendung für denselben Fasertyp propagiert werden. Der Grund dafür liegt vor allem in der Tatsache, daß Vertreter des gleichen Sortiments ein aufeinander abgestimmtes Fixierverhalten aufweisen, so daß bei einer Mischung aus solchen Einzelkomponenten keine unterschiedlichen Verhältnisse während der Fixierung der Farbstoffe vorliegen. Im Falle von Reaktivfarbstoffen ist es sogar eine Bedingung für eine erfolgreiche und brauchbare Nuancierung, daß man dafür nur Farbstoffe des gleichen Sortiments verwendet, weil in dieser Weise am ehesten das Vorhandensein identischer Reaktivsysteme gewährleistet ist und dann vorteilhaft übereinstimmende Bedingungen für die Verankerung der Farbstoffe im Substrat gegeben sind. Unabhängig davon bleibt zu berücksichtigen, daß der Colorist in der Auswahl der Farbstoffe für einen bestimmten Farbton eingeengt ist durch die Forderungen nach bestimmten Fabrikations- und Trageechtheiten.

Nun ist es aber auch bekannt, daß der Mengenbedarf an Reaktivfarbstoffen nicht gleichmäßig auf die einzelnen Handelsmarken eines Sortimentes verteilt ist. Wie in allen Farbstoffsortimenten gibt es - vom wirtschaftlichen Aspekt her gesehen- hierin schwache und starke Vertreter. Modebedingt mögen wohl einige Verschiebungen im Verbrauch an Produkten mit bestimmten selten gefragten Farbtönen auftreten, aber im allgemeinen bleiben die Umsätze der sogenannten Nuancierungsfarbstoffe jedoch weiter unter denen, welche den hauptsächlichen Anteil am Verkauf eines Sortimentes ausmachen. Dieser Umstand erhöht die Durchschnittsgestehungspreise, weil die Produktion der für die Palette notwendigen, aber mengenmäßig unbedeutenden Nuancierungsfarbstoffe kostenintensiver ist. Durch ihre kleinen Produktionsmengen machen sie jegliche Rationalisierungsmaßnahme unmöglich. Darüber hinaus besteht noch das Problem, daß nicht jedes mit einer Reaktivgruppe versehene Chromophor bereits einen brauchbaren Reaktivfarbstoff darstellt. Dazu müssen - wie schon gesagt - sowohl die Trageeigenschaften als auch das Applikationsvermögen in den Rahmen des Sortimentes passen. Ferner ist es notwendig, daß derartige Verbindungen nicht nur reproduzierbar, sondern auch zu vergleichbarem Preis im Rahmen des Sortimentes produzierbar sind.

Die für vorliegende Erfindung gestellte Aufgabe besteht nunmehr darin, die zuvor geschilderten Schwierigkeiten bei der Erstellung von nicht unmittelbar verfügbaren Nuancen für das Färben und Bedrucken von hydroxy- und/oder carbonamidgruppen-haltigen Fasermaterialien mit Reaktivfarbstoffen zu beheben.

Es wurde nun gefunden, daß man ohne größeren technischen Aufwand zu Reaktivfarbstoffsortimenten mit geschlossenen Paletten kommen kann, wenn man

(a) mindestens einen wasserlöslichen, polyfunktionellen Reaktivfarbstoff, der zwei oder mehrere, gegebenenfalls unterschiedliche faserreaktive Gruppierungen im Molekül aufweist oder befähigt ist, zwei oder mehrere solcher Gruppierungen beim Färben oder Bedrucken des Textilmaterials unter dem Einfluß eines säurebindenden Mittels zu bilden, und

(b) mindestens einen wasserlöslichen, nicht von sich aus faserreaktiven Farbstoff, der ein oder mehrere vorzugsweise über Stickstoff, Sauerstoff oder Schwefel gebundene umsetzungsfähige Wasserstoffatome im Molekül aufweist oder befähigt ist, beim Färben oder Bedrucken des Textilmaterials unter dem Einfluß eines säurebindenden Mittels verfügbar zu machen,

miteinander kombiniert, unter der Maßgabe, daß in der Farbstoffmischung die molare Menge an der Komponente (a) mindestens das zweifache der molaren Menge an der Komponente (b) beträgt.

Gegenstand der vorliegenden Erfindung ist nunmehr ein Verfahren zum Einstellen von Farbrezepten zwecks Aufbau einer handelsüblich aufgrund von einheitlich färbenden Produkten direkt nicht zugänglichen Nuance unter Zuhilfenahme von Komponenten mit voneinander nicht-identischem Farbton, welche auf hydroxy- und/oder carbonamidgruppen-haltigen textilen Substraten aufgebracht im Verlauf einer Fixieroperation bei gewöhnlicher oder erhöhter Temperatur unter dem Einfluß von säurebindenden Mitteln homöopolare Bindungen mit den genannten Gruppen der Fasersubstanz einzugehen vermögen, welches dadurch gekennzeichnet ist, daß man Farbstoffmischungen auswählt, die aus den oben definierten Komponenten (a) und (b) zusammengesetzt sind und deren Einsatzmengen zweckmäßigerweise im Einklang mit dem vorstehend ausgesprochenen Vorbehalt stehen.

Das erfindungsgemäße Verfahren macht sich somit zum Nuancen-Aufbau erfolgreich die Tatsache zunutze, daß die Erzeugung homöopolarer Bindungen zwischen hydroxy- und/oder carbonamidgruppen-haltigem Textilgut und wasserlöslichen, nicht faserreaktiven Farbstoffen, welche im Molekül mindestens ein aktives Wasserstoffatom aufweisen, gelingt, wenn als Bindungsglied ein wasserlöslicher Reaktivfarbstoff mit mindestens zwei Reaktivgruppen verwendet wird. Nun ist zwar ein ähnliches Bindungsprinzip bereits der GB-PS 923 162 zu entnehmen, wo nach dem dort erläuterten Verfahren Farbstoffe substantiven Charakters ohne eigene Reaktivgruppe, jedoch mit umsetzungsfähigen Wasserstoffatomen vom gleichen Typ wie Komponente (b) unter Zuhilfenahme von ungefärbten polyfunktionellen Verbindungen, die mindestens zwei über Stickstoff gebundene $H_2C=CH-CO-$Gruppen tragen, z.B. Methylen-bis-acryloylamid oder bevorzugt Hexahydro-1,3,5-triacryloyl-s-triazin, auf cellulosehaltigem Textilgut fixiert werden. Der praktische Sinn der Maßnahmen gemäß diesem Stand der Technik ist ausschließlich dem Bestreben zuzurechnen, Färbungen und Drucke mit solchen nicht-reaktiven Substantivfarbstoffen, die von sich aus wohl reichliche Farbausbeuten, jedoch nur mangelhafte Naßechtheiten erbringen, durch den Kunstgriff mit dem nichtfärbenden Zwischenglied in den Genuß der durch eine reaktive Bindung mit der Faser erzielbaren einwandfreien Echtheitseigenschaften gelangen zu lassen, während die echtfärbenden Reaktivfarbstoffe selbst ansonsten nur mäßige Farbausbeuten zeigen. Eine Kombination der jeweils vorteilhaften anwendungstechnischen bzw. coloristischen Eigenschaften aus den beiden Farbstofftypen sollte auf dem erwähnten Umweg erreicht werden; die gemäß Verfahren nach der GB-PS 923 162 erhältlichen Farbtöne bleiben demzufolge unverändert und entsprechen denen der substantiven Farbstoffe. Daraus ergibt sich, daß die Möglichkeit, auf der Grundlage des aufgezeigten Mechanismus den Aufbau einer besonderen Nuance bei gleichzeitiger Absicherung derselben durch eine reaktive Bindung zu bewerkstelligen, von dem aus der GB-PS bekannten Stand der Technik nicht in Betracht gezogen worden ist.

Als polyfunktionelle Reaktivfarbstoffe der Gruppe (a) kommen nach der vorliegenden Erfindung die unter diesem Begriff bekannten organischen Verbindungen - unabhängig von der Art ihrer reaktiven Gruppierung - in Betracht. Diese Farbstoffklasse wird im Colour Index, 3. Auflage 1971 unter der Gattungsbezeichnung "Reactive Dyes" aufgeführt. Es handelt sich hierbei vorwiegend um solche Farbstoffe, die - mindestens zweifach - eine mit der Faser reaktionsfähige Gruppe, eine Vorstufe hierfür oder einen mit der Faser reaktionsfähigen Substituenten besitzen, beispielsweise einen Rest der Vinylsulfon-Reihe wie $-SO_2-CH=CH_2$, $-SO_2-CH_2-CH_2-Hal$ oder $-SO_2-CH_2-CH_2-A$ (in welchen Hal für ein Halogenatom und A für den Acyloxyrest einer ein- oder mehrbasischen Säure steht), oder einen faserreaktiven Monohalogen-triazinyl-Rest enthalten, die an unterschiedlichen Stellen des Farbstoffmoleküls gebunden sind und wobei mehrere gleichartige oder verschiedenartige Reaktivgruppen vorhanden sein können. Als chromophorer Grundkörper derartiger Verbindungen eignen sich solche aus der Reihe der Azo-, Anthrachinon- und Phthalocyaninfarbstoffe, wobei sich die Azo- und Phthalocyaninfarbstoffe sowohl in metallfreier als auch metallhaltiger Form einsetzen lassen: Außer dem reaktiven Bestandteil weisen Farbstoffe dieses Typs häufig mehr als eine Sulfonsäure- und/oder Carboxylgruppe als wasserlöslich machende Substituenten auf. Farbstoffe dieser Kategorie sind beispielsweise in den deutschen Patentschriften 1 150 164, 1 265 698, 2 001 960, 2 355 703, 2 607 028, 2 614 550 und 2 653 199 und darüber hinaus in den deutschen Offenlegungsschriften 2 927 102 und 3 019 960 beschrieben.

Zu den erfindungsgemäß von der Gruppe (b) umfaßten, nicht-reaktiven, wasserlöslichen Farbstoffen gehören Verbindungen u.a. aus der Reihe der Azo-, Metallkomplex-, Anthrachinon- und Phthalocyanin-Farbstoffe, welche mindestens ein aktives Wasserstoffatom des näher gekennzeichneten Bindungscharakters, z.B. in Form von primären oder sekundären Amino-gruppen, Sulfonsäureamid-, -alkylamid- oder -arylamid-gruppen, Carbonsäureamid- oder -alkylamidgruppen, Hydroxyl-gruppen und/oder Sulfhydrylgruppen oder über Kohlenstoff gebundene umsetzungsfähige Wasserstoffatome aufweisen. Ferner sind Farbstoffe mit Methylenäthergruppen oder Methylenestergruppen geeignet, die während des Verfahrens in Methylolgruppen übergehen. Die Farbstoffe dieses Typs sind darüber hinaus gegebenenfalls mit wasserlöslich machenden Substituenten ausgerüstet. Mit gewissen Ein-schränkungen zählen zum Kreis der Verbindungen nach Gruppe (b) auch optische Aufheller. Beispiele für Farbstoffe dieser Art sind in den britischen Patentschriften 520 199, 908 301, 811 221, 811 222, 900 764, 827 568, 824 300, 771 320, in den deutschen Patentschriften 742 939 und 335 809 und in der U.S. Patentschrift 2 459 771 veröffentlicht. Darüber hinaus fallen unter der Gruppe (b) auch aufgelistete Handelsfarbstoffe gemäß Tabelle I auf Seite 8 der britischen Patentschrift 923 162.

Das Mischmengenverhältnis der Farbstoffe der Gruppe (a) und (b) richtet sich nach dem erwünschten Nuancierungseffekt, wobei die Farbstoffe der Gruppe (a) erfindungsgemäß die Hauptkomponente der Mischungen bilden.

Mit den nach vorliegender Erfindung zusammengestellten Farbstoffmischungen können sowohl Hydroxy- als auch Carbonamidgruppen enthaltende Fasermaterialien echt und in allen Farbtönen coloriert werden. Das neue Verfahren wird in erster Linie zum Färben oder Bedrucken von Textilgut aus nativer und/oder regenerierter Cellulose eingesetzt; es dient jedoch auch zur Anwendung auf Materialien aus natürlichen oder synthetischen Polyamidfasern, insbesondere Wolle. Selbstverständlich ist es auch brauchbar für die Colorierung des hydroxy- und/oder carbonamidgruppenhaltigen Faseranteils von Mischgeweben mit Synthesefasern, z.B. aus Polyestern.

Die Applikation der nach dem beanspruchten Verfahren zur Einstellung der gewünschten Nuance ausgewählten Farbstoffmischungen aus den Gruppen (a) und (b), wobei der molare Anteil an Farbstoffen der Gruppe (a) immer zweimal größer ist als derjenige der Gruppe (b), erfolgt nach der Pflatsch-, Klotz- oder Drucktechnik in Gegenwart von säurebindenden und gegebenenfalls auch viskositätsregulierenden Mitteln. Dabei kann es von Interesse.sein, von Präparationen auszugehen, die außer den Farbstoffmischungen der oben gekennzeichneten Art in dem vorgeschriebenen Mischungsverhältnis gegebenenfalls noch Dispergiermittel und/oder Schutzkolloide und/oder Färberei- oder Druckereihilfsmittel enthalten. Gegenstand der vorliegenden Erfindung sind somit auch Präparationen der erwähnten Art.

Säurebindende Mittel für die Durchführung der Färbungen oder Drucke mit den erfindungsgemäß eingestellten Farbstoffmischungen sind vorzugsweise anorganische, alkalisch wirkende Mittel, z.B. insbesondere Alkalimetallhydroxide oder -carbonate, aber auch solche Verbindungen, die unter den üblichen Bedingungen des Färbens oder Bedruckens in alkalisch wirkende Mittel übergehen, beispielsweise Alkalimetallbicarbonate sowie Di- oder Trialkalimetallphosphate, Alkalimetall-trichloracetat u.a., wobei auch Gemische dieser Chemikalien zur pH-Regulierung verwendet werden können.

Die Färbeflotten und Druckpasten der erfindungsgemäß verwendeten Art können außer den Farbstoffmischungen und säurebindenden Mitteln die üblichen Zusätze enthalten, wie oberflächenaktive Verbindungen, Antimigrationshilfsmittel, Lösungsvermittler und Fixierhilfsmittel für die Farbstoffe, oder Verdickungsmittel auf natürlicher und/oder synthetischer Basis.

Die die Farbstoffmischungen und das säurebindende Mittel sowie gegebenenfalls weitere Zusätze aufweisenden Flotten und Druckpasten können innerhalb eines breiten Temperaturbereiches auf dem Fasermaterial aufgetragen werden, vorzugsweise bei Raumtemperatur oder bei Temperaturen bis zu 60°C. Das säurebindende Mittel kann man aber auch vor oder nach der Applikation der Färbeflotten oder Druckpasten, die dann dieses Mittel nicht enthalten, mit dem Textilgut in Kontakt bringen.

Die Fixierung der Farbstoffe auf dem textilen Substrat wird gegebenenfalls im Anschluß an eine vorhergehende Zwischentrocknung nach den für Reaktivfarbstoffe üblichen Methoden durch thermische Behandlung in einer Dampf- oder Heißluftatmosphäre bei 100° bis 230°C oder durch Lagerung unter stark alkalischen pH-Bedingungen bei gewöhnlicher

- 9 -                    0114360

oder erhöhter Temperatur vorgenommen. Die Fertigstellung
der colorierten Ware nach der Fixierung ist identisch mit
der für Reaktivcolorierungen.

Die Trageeigenschaften der unter Einsatz des neuen Verfahrens colorierten Ware entsprechen überraschenderweise denen,
die man sonst nur mit den Reaktivfarbstoffen der Gruppe (a)
erhält. Ein großer Vorteil der erfindungsgemäß eingestellten
Farbstoffkombinationen liegt in der Tatsache, daß man damit
Farbtöne im Druck herstellen kann, die beim Spülen und
Waschen der fixierten Drucke keine Probleme der Anschmutzung
des Fonds durch unfixierte Farbstoffe mehr mit sich bringen.
Bekanntlich neigen beispielsweise unfixierte Reaktivfarbstoffe, deren Chromophor Phthalocyaninverbindungen sind,
beim Spülen und Waschen sehr zum Anschmutzen des Druckbodens. Noch größer wird diese Anschmutzgefahr, wenn die
Reaktivgruppen eine zusätzliche Substantivität zu der des
Phthalocyaninchromophors beisteuern. Mit den Farbstoffeinstellungen gemäß dieser Erfindung kann man beispielsweise
Grünmischungen mit einer mehrfachen Menge an gelben Reaktivfarbstoffen der Gruppe (a) und einer untergeordneten Menge
an Phthalocyaninderivaten aus der Gruppe (b) herstellen. Bei
der Fixierung werden die Phthalocyaninmoleküle dann restlos
mittels der Moleküle des gelben Reaktivfarbstoffs an die
Faser verankert und können dadurch nicht mehr im Spül- oder
Waschwasser vagabundieren. Diese Tatsache ist im Druck
deshalb so wichtig, weil die vagabundierenden, unfixierten
Farbstoffreste durch Anschmutzung den Wert der Druckware
schwer herabsetzen können.

Ebenso bedeutsam ist fernerhin die Erkenntnis, daß man mit
Hilfe des erfindungsgemäßen Verfahrens unerwünschte Farbtonänderungen auf der Ware vermeiden kann. Durch Licht oder
Licht in Zusammenwirkung mit Schweiß ändern Drucke oder
Färbungen oft ihren Farbton für immer. Sofern es sich hierbei um einen schwarzen Reaktionsfarbstoff mit mindestens
zwei Reaktivgruppen handelt, kann man nunmehr dieser Farbtonänderung durch Nuancierung gemäß dem beanspruchten Verfahren gegensteuern. Beispielsweise werden Drucke mit dem Farbstoff Reactive Black 5 entsprechend der C.I.-Nr. 20505 durch Lichteinfluß in Gegenwart von Schweiß bräunlich. Durch Nuancierung mit einem der blauen Farbstoffe aus den auf Seite 6 genannten Patentschriften kann jedoch diese Verbräunung des schwarzen Farbtons verhindert werden.

Beispiel 1

Ein Baumwollgewebe wird mit einer Druckpaste der nachstehenden Zusammensetzung bedruckt, die man wie folgt herstellt:

50 g des Reaktivfarbstoffes (rotstichig gelb) gemäß
       Beispiel 2 der DE-OS 29 27 102 werden mit
20 g des Farbstoffes Nr. 19 (rot) von Tabelle II auf
       Seite 12 der GB-PS 923 162 und
100 g Harnstoff in
300ml Wasser gelöst. Unter weiterem Zusatz von
20 g Natriumbicarbonat,
450 g einer 4 %igen, wässrigen Lösung eines hochmolekularen
       Natriumalginats und
60 g Wasser oder Alginatlösung wird die Mischung unter
       Rühren verarbeitet zu

―――――

1000 g Druckpaste.

Nach der Trocknung wird der Druck während 5 Minuten durch die Einwirkung von Sattdampf bei 102°C fixiert. Hiernach wird die so behandelte Ware zunächst mit Wasser gespült und dann wie üblich gewaschen. Nach nochmaligem Spülen mit Wasser wird die erzeugte Druckfärbung geschleudert und schließlich getrocknet.

Man erhält auf dem Fond aus weißem Baumwollgewebe echte, brillant scharlachfarbene Drucke.

Beispiel 2

Ein Cellulosegewebe wird auf dem Foulard bei Raumtemperatur sowie einer Flottenaufnahme von 80 % (bezogen auf das Gewicht der trockenen Ware) mit einer wäßrigen Klotzflotte imprägniert, die pro Liter enthält:

50 g des Reaktivfarbstoffes (rot) gemäß Beispiel 8 der DE-PS 1 265 698,

20 g des Farbstoffes Acid Yellow 98 (grünstichig gelb) mit der C.I.-Nr. 14006,

20 g Natriumbicarbonat

810 ml Wasser und

100 g einer 4 %igen, wässrigen Natriumalginatlösung

_____

1000 g

Im Anschluß an eine Zwischentrocknung wird die geklotzte Ware entsprechend Beispiel 1 der Fixierung unterworfen und wie dort beschrieben fertiggestellt.

Man erhält auf dem Textilgut eine gelbstichige Rotfärbung von guten Naß- und Lichtechtheiten.

Beispiel 3

Auf ein Gewebe aus Cellulosefasern wird eine Druckpaste aufgebracht, welche folgende Bestandteile aufweist:

80 g des Reaktivfarbstoffes (gelb) gemäß Beispiel 3 der DE-OS 30 19 960,

20 g des Farbstoffes Nr. 14 (blau) von Tabelle II auf Seite 11 der GB-PS 923 162,

20 g Natriumbicarbonat

50 g Harnstoff

500 g einer 4 %igen, wässrigen Lösung eines langkettigen Alginats und

330 ml Wasser

_____

1000 g Druckpaste

Das in dieser Weise hergestellte Druckmuster wird nach dem Trocknen wie in Beispiel 1 durch Dämpfen fixiert.

Nach der Fertigstellung erhält man brillante grüne Drucke mit sehr guten Naß- und Lichtechtheiten auf rein weißem Grund.

PATENTANSPRÜCHE:

1. Verfahren zum Einstellen von Farbrezepten zwecks Aufbau einer handelsüblich aufgrund von einheitlich färbenden Produkten direkt nicht zugänglichen Nuance unter Zuhilfenahme von Farbstoffmischungen aus Komponenten mit voneinander nicht-identischem Farbton, welche auf hydroxy- und/oder carbonamidgruppen-haltigen textilen Substraten aufgebracht im Verlauf einer Fixieroperation bei gewöhnlicher oder erhöhter Temperatur unter dem Einfluß von säurebindenden Mitteln homöopolare Bindungen mit den genannten Gruppen der Fasersubstanz einzugehen vermögen, dadurch gekennzeichnet, daß man Farbstoffmischungen auswählt, die aus

(a) mindestens einem wasserlöslichen, polyfunktionellen Reaktivfarbstoff, der zwei oder mehrere, gegebenenfalls unterschiedliche faserreaktive Gruppierungen im Molekül aufweist oder befähigt ist, zwei oder mehrere solcher Gruppierungen beim Färben oder Bedrucken des Textilmaterials unter dem Einfluß eines säurebindenden Mittels zu bilden, und aus

(b) mindestens einem wasserlöslichen, nicht von sich aus faserreaktiven Farbstoff, der ein oder mehrere vorzugsweise über Stickstoff, Sauerstoff oder Schwefel gebundene umsetzungsfähige Wasserstoffatome im Molekül aufweist oder befähigt ist, beim Färben oder Bedrucken des Textilmaterials unter dem Einfluß eines säurebindenden Mittels verfügbar zu machen,

zusammengesetzt sind.

2. Verfahren nach Anspruch 1, dadurch gekennzeichnet, daß in der Farbstoffmischung die molare Menge an der Komponente (a) mindestens das zweifache der molaren Menge an der Komponente (b) beträgt.

3. Verwendung des Verfahrens nach den Ansprüchen 1 oder 2 beim Färben oder Bedrucken von hydroxy- und/oder carbonamidgruppen-haltigen textilen Substraten, dadurch gekennzeichnet, daß man Farbstoffmischungen, die aus

(a) mindestens einem wasserlöslichen, polyfunktionellen Reaktivfarbstoff, der zwei oder mehrere, gegebenenfalls unterschiedliche faserreaktive Gruppierungen im Molekül aufweist oder befähigt ist, zwei oder mehrere solcher Gruppierungen beim Färben oder Bedrucken des Textilmaterials unter dem Einfluß eines säurebindenden Mittels zu bilden, und aus

(b) mindestens einem wasserlöslichen, nicht von sich aus faserreaktiven Farbstoff, der ein oder mehrere vorzugsweise über Stickstoff, Sauerstoff oder Schwefel gebundene umsetzungsfähige Wasserstoffatome im Molekül aufweist oder befähigt ist, beim Färben oder Bedrucken des Textilmaterials unter dem Einfluß eines säurebindenden Mittels verfügbar zu machen,

zusammengesetzt sind, nach der Pflatsch-, Klotz- oder Drucktechnik auf das Fasermaterial aufbringt und die Farbstoffe dort bei gewöhnlicher oder erhöhter Temperatur in Gegenwart eines säurebindenden Mittel fixiert.

4. Präparation zum Färben oder Bedrucken von hydroxy- und/oder carbonamidgruppen-haltigen textilen Substraten, gekennzeichnet durch einen Gehalt an einer Farbstoffmischung aus

(a) mindestens einem wasserlöslichen, polyfunktionellen Reaktivfarbstoff, der zwei oder mehrere, gegebenenfalls unterschiedliche faserreaktive Gruppierungen im Molekül aufweist, oder befähigt ist, zwei oder mehrere solcher Gruppierungen bei Färben oder Bedrucken des Textilmaterials unter dem Einfluß eines

**0114360**

säurebindenden Mittels zu bilden, und aus

(b) mindestens einem wasserlöslichen, nicht von sich aus faserreaktiven Farbstoff, der ein oder mehrere vorzugsweise über Stickstoff, Sauerstoff oder Schwefel gebundene umsetzungsfähige Wasserstoffatome im Molekül aufweist oder befähigt ist, beim Färben oder Bedrucken des Textilmaterials unter dem Einfluß eines säurebindenden Mittels verfügbar zu machen, und gegebenenfalls aus

(c) einem Dispergiermittel und/oder Schutzkolloid und/ oder einem Färberei- oder Druckereihilfsmittel.

5. Präparation nach Anspruch 4, dadurch gekennzeichnet, daß in der Farbstoffmischung die molare Menge an der Komponente (a) mindestens das zweifache der molaren Menge an der Komponente (b) beträgt.